(19) Europäisches Patentamt
European Patent Office
Office européen des brevets

(11) **EP 3 723 476 B1**

(12) **EUROPEAN PATENT SPECIFICATION**

(45) Date of publication and mention
of the grant of the patent:
**17.04.2024 Bulletin 2024/16**

(21) Application number: **18888089.2**

(22) Date of filing: **12.12.2018**

(51) International Patent Classification (IPC):
**A01K 15/02** [(2006.01)]     **H05C 1/04** [(2006.01)]

(52) Cooperative Patent Classification (CPC):
**A01K 15/022; H05C 1/04**

(86) International application number:
**PCT/US2018/065122**

(87) International publication number:
**WO 2019/118555 (20.06.2019 Gazette 2019/25)**

(54) **METHOD AND APPARATUS FOR APPLYING, MONITORING, AND ADJUSTING A STIMULUS TO A PET**

VERFAHREN UND VORRICHTUNG ZUR ANWENDUNG, ÜBERWACHUNG UND ANPASSUNG
EINES REIZES AUF EIN HAUSTIER

PROCÉDÉ ET APPAREIL POUR APPLIQUER, SURVEILLER ET AJUSTER UN STIMULUS À UN
ANIMAL DE COMPAGNIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.12.2017 US 201715839737
12.12.2017 US 201715839749**

(43) Date of publication of application:
**21.10.2020 Bulletin 2020/43**

(73) Proprietor: **Radio Systems Corporation
Knoxville, TN 37932 (US)**

(72) Inventors:
• **SELTZER, Richard**
**Knoxville, Tennessee 37932 (US)**
• **WEYBRECHT, Stephen**
**Knoxville, Tennessee 37932 (US)**
• **MAININI, Christopher E.**
**Knoxville, Tennessee 37932 (US)**
• **TYNDALL, Patrick**
**Knoxville, Tennessee 37932 (US)**

(74) Representative: **Mewburn Ellis LLP
Aurora Building
Counterslip
Bristol BS1 6BX (GB)**

(56) References cited:
**US-A1- 2008 216 766     US-A1- 2008 216 766
US-A1- 2009 112 284     US-A1- 2011 203 529
US-A1- 2014 228 927**

**Description**

RELATED APPLICATIONS

This application claims priority to US Application No. 15/839,737, filed December 12, 2017, and claims priority to US Application No. 15/839,749, filed December 12, 2017.

TECHNICAL FIELD

The disclosure herein involves dynamic voltage modulation.

BACKGROUND

Pet training and containment is essential for pet owners. One of the most common humane and effective training methods is electrical stimulation of the pet animal. Short electrical pulses are used to communicate desired behaviors. Currently, there is very little variance in stimulation delivery methods. Most typical methods deliver a pre-determined charge directly from the output of a transformer with an assumption that the proper charge is delivered successfully.
US 2014/228927 describes an electro-acupuncture device for controlling an over active bladder. US 2008/216766 describes a remote receiving circuit for providing and controlling an electric stimulus applied to an animal including an electronic switch powered by a battery in series on a primary of a highvoltage transformer and whose on/off state can be modified by control pulses to create a source of alternating current to supply the primary of the transformer. US 2009/112284 describes a biofeedback electronic stimulation device including a processor for generating a first control signal and a plurality of second control signals responsive to at least one input signal.

BRIEF DESCRIPTION OF THE DRAWINGS

Figure 1 shows a circuit for developing, applying, and monitoring stimulus levels in controlling delivery of electrical stimulation to an animal, under an embodiment.

Figure 2 shows a circuit for developing, applying, and monitoring stimulus levels in controlling delivery of electrical stimulation to an animal, under an embodiment.

Figure 3 shows a circuit for developing, applying, and monitoring stimulus levels in controlling delivery of electrical stimulation to an animal, under an embodiment.

Figure 4 shows a method for modulating delivery of electrical stimulus to an animal, under an embodiment.

Figure 5 shows an oscilloscope trace of a high voltage electrode and a return electrode, under an embodiment.

Figure 6 shows a single electrical pulse followed by energy recovery, under an embodiment.

Figure 7 shows a single electrical pulse followed by energy recovery, under an embodiment.

Figure 8 shows a single electrical pulse followed by energy recovery, under an embodiment.

Figure 9 shows adjusted pulses applied at a lower voltage level while still delivering a sufficient energy level, under an embodiment.

Figure 10 shows a circuit for measuring intensity of an electrical stimulation, under an embodiment.

Figure 11A shows a one shot timer with interrupt for desired pulse width, under an embodiment.

Figure 11B shows primary current as a function of time, under an embodiment.

Figure 11C shows secondary current as a function of time, under an embodiment.

Figure 11D shows sampled voltage measurements, under an embodiment.

DETAILED DESCRIPTION

Systems and methods for delivering electrical stimulation to an animal suffer an inability to deliver precise and accurate voltage levels, an inability to precisely adjust these levels, and lack of methods to reliably determine whether a charge is effectively delivered to the pet. This problem leads to under- or over-correction of the pet which may the lead to increased stress levels during the training process and therefore decreased effectiveness.

Systems and methods are herein proposed in this application that precisely deliver electrical pulses to the pet through electrodes and that are able to determine delivery effectiveness of these pulses in a measureable manner. Based on the measured delivery effectiveness of pulses, subsequent pulses may be adjusted to increase the chances of delivery effectiveness if it is determined that successful delivery has not yet occurred. Subsequent pulses may be adjusted to minimize pulse magnitudes to decrease stress to the pet while still maintaining effectiveness if it is determined that successful delivery has occurred.

The systems and methods proposed herein implement two capabilities:
An electrical stimulus pulse development of an embodiment uses a method to precisely control the voltage and timing of energy pulses that are delivered to the pet.

Load resistance may be accurately determined under an embodiment. Load resistance is an indicator of skin conduction, which is an indicator of pulse delivery effectiveness. Identifying the point in time when skin breakdown occurs allows for a reduction in voltage level on subsequent pulses while still eliciting a similar response. Identifying the fact that the skin is not breaking down due to stimulus pulses indicates a need to increase the voltage to maximize the chance of breakdown and conduction.

In addition to the voltage adjustment and effectiveness monitoring, the use of this new technology allows for a much smaller design. As the transformer is used in step-up mode to incrementally build up a charge within storage components until such time as a return path switch is activated, the size can be much smaller than with typical techniques as it is not required to deliver a charge from a single cycle of its magnetic potential. It may take several hundred, or even several thousand cycles of charge from the transformer to build up energy in the storage components before the energy is released. The fact that the system requires an extended period of time to restore the depleted energy means there is time to monitor and control the precise voltage and also determine effectiveness of the prior pulse due to the amount of energy required to refill the storage components.

The systems and methods described herein include a method used to develop, apply (release), analyze, and adjust electrical stimulus pulses based on the load conditions of the pet skin. The electrical stimulus approach utilizes a microprocessor to control all aspects of stimulus development, release, and monitoring. The microprocessor controls a switched mode power supply, consisting of transformer and voltage doubler(s) to step-up the input voltage. The voltage is presented to storage component(s) (typically capacitors) for storage which is exposed on an electrode. This stored charge is monitored by the processor via a feedback loop. Once the processor determines a threshold voltage level is reached and any additional desired delay time is added, a high voltage switch (i.e., transistor) is switched on by the processor for the desired stimulus pulse length to complete a return path on a second electrode providing a path for current to flow from one electrode, through the pet's skin, into the second electrode, and to system return.

It is also plausible that a switch be utilized on the high voltage side of the circuit to provide a path from the storage component to the electrode (high-side switch).

The feedback loop allows for real time monitoring of voltage level and charge time. This knowledge allows a processing unit to: (i) precisely and accurately determine the stimulus pulse magnitude and (ii) monitor the recharge time. The feedback loop therefore allows determination of the depleted charge using recharge time as a direct indicator of load resistance (skin resistance). Based on depleted charge findings, subsequent pulses may be:

increased to compensate for non-optimal dermal contact;
reduced to decrease stress on the pet, while maintaining training effectiveness; and/or
reduced to save energy as lower voltage pulses require less energy to be depleted from the system power supply.

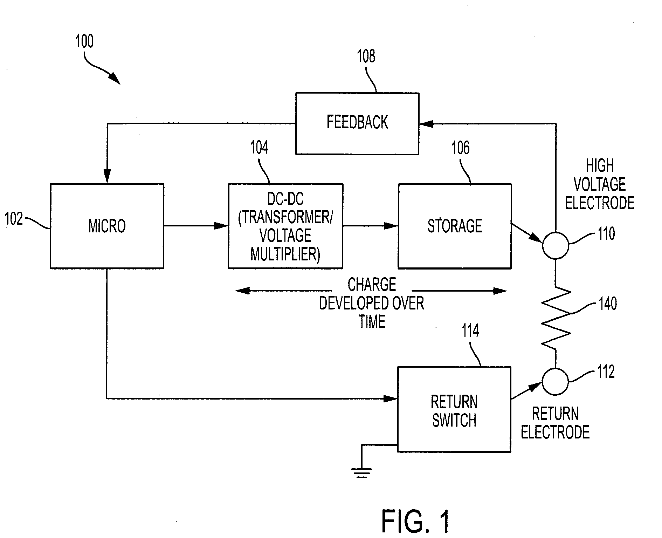

Figure 1 shows a circuit 100 for monitoring stimulus levels in controlling delivery of precise electrical stimulation to an animal. Figure 1 shows a microcontroller 102 which controls a DC-DC converter (i.e. transformer plus voltage multiplier) 104 which steps up the input voltage. The stepped-up voltage is then presented to a storage component (typically capacitor(s)) 106 for storage. The storage component may include one or more capacitors which are connected to a first (high voltage) electrode 110. The circuit shown in Figure 1 shows a feedback connection 108 between the first electrode and the microcontroller 102 such that the microcontroller may monitor potential energy at the first electrode. The microcontroller also controls a return switch 114. The microcontroller may then use the return switch 114 to provide a return path to voltage stored in the storage component after passing through the pet skin. The switch may comprise a transistor and may provide the return path for the desired stimulus pulse length. Stimulus delivery then comprises current flow from the first electrode 110 through the pet's skin (i.e. resistive load 140), into the second return electrode 112, and to system return (ground).

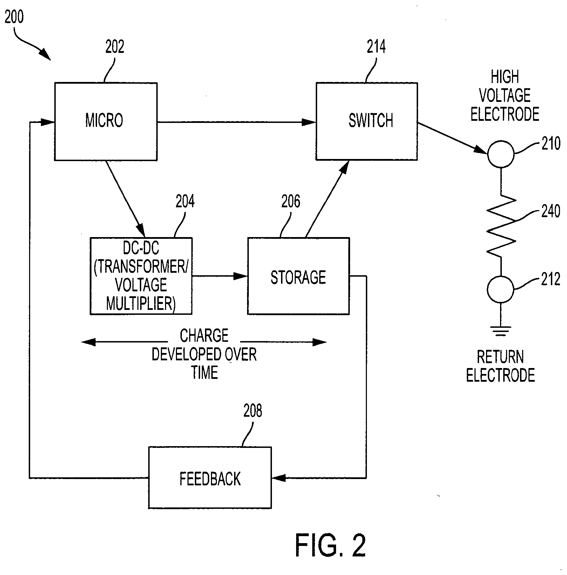

Figure 2 shows the same components of the circuit described above. However, the circuit 200 of Figure 2 places the transistor switch 214 directly between the microcontroller 202 and the first electrode 210. The DC-DC converter 204 steps up voltage delivered by the microcontroller and charges the storage 206 component. A feedback connection 208 is provided between the storage component 206 and the microcontroller 202. The microcontroller 202 controls a transistor 214 in providing a pathway between the storage component 206 (charged by the DC-DC converter 204) and the first electrode 210 for a desired stimulus pulse length. During stimulus delivery, current flows from the storage component to the first electrode 210 through the pet's skin (or resistive load 240), into the second return electrode 212, and to system return (ground). In contrast to the circuit of Figure 1, the return electrode 212, in contact with the animal skin, is always connected to system return (ground).

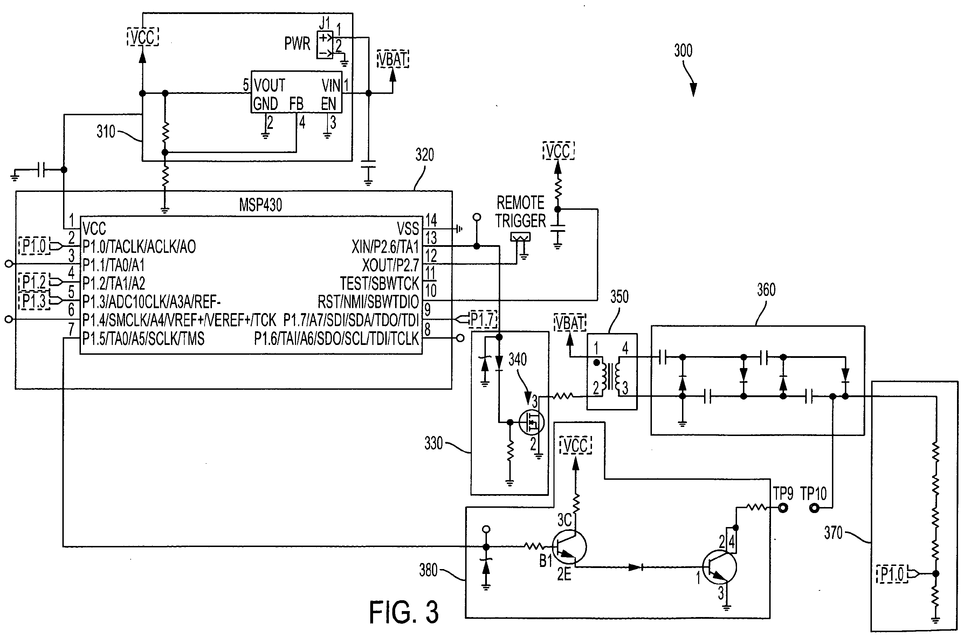

Figure 3 shows a circuit 300 for developing, applying and monitoring stimulus levels in controlling delivery of electrical stimulation to an animal, under an embodiment. Figure 3 shows voltage regulator 310 and microprocessor 320. Figure 3 shows the transformer-primary control 330. The Field-Effect Transistor (FET) 340 acts as a switch at a frequency and duty cycle to efficiently allow current to flow through the primary of the step-up transformer 350. Element 360 of Figure 3 demonstrates two stages of voltage doublers, which creates a voltage quadrupler, under an embodiment. As many stages as required may be cascaded for the specific application (in combination with the turns ratio of the step-up transformer). Accordingly, the step-up transformer 350 and voltage quadrupler 360 component comprise a DC-DC Step-up converter. Voltage divider 370 reduces the high voltage output to a level compatible with the microprocessor inputs. Figure 3 shows a controllable high voltage return path 380. This return path controls the duration of the stimulation pulse by providing a path from the high voltage electrode, through the skin, into the low side electrode, and to system ground.

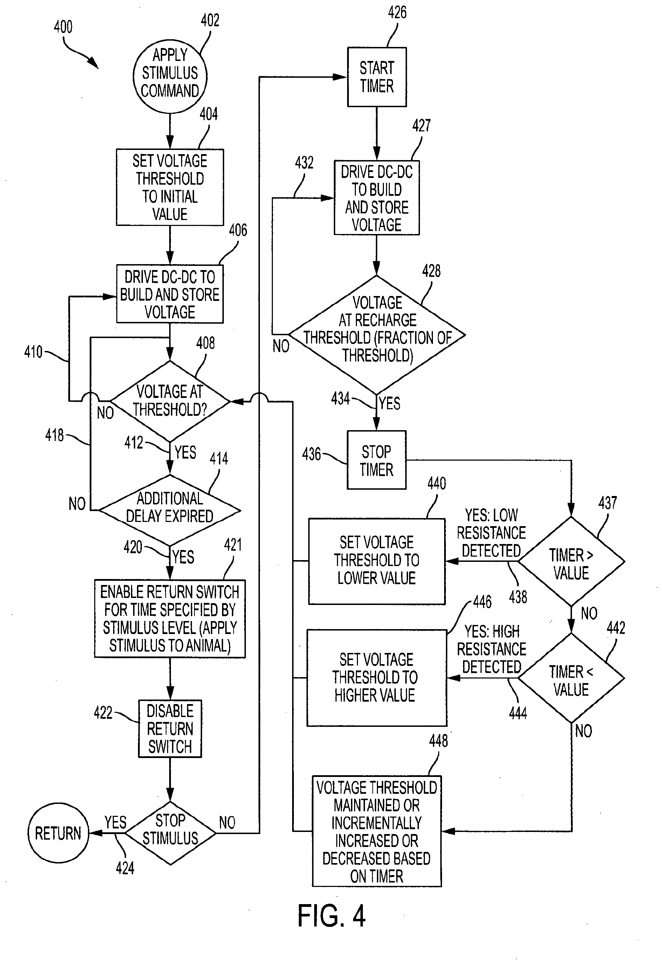

Figure 4 shows a method for modulating stimulus delivery to an animal. A first step 402 involves applying a stimulus command, i.e. a command to deliver an electrical stimulus using the feedback control circuit described herein. Step 404 comprises setting a voltage threshold to an initial value. Step 406 involves a microcontroller controlling a DC-DC converter to provide a voltage to a storage component to drive and build voltage potential. The method iteratively checks the voltage 408 to determine if a threshold is met. If no 410 then voltage development and storage continues. If yes 412, the method proceeds to step 414 to determine if an additional delay is expired. If not 418 then the method maintains voltage at the stored potential level. If the answer is yes 420 then the microcontroller enables the return switch for a time specified or determined by a given stimulus level 421, i.e. the stimulus is applied to the animal. The microcontroller then disables the switch 422, i.e. return pathway. If application of the stimulus command is discontinued 424, then the method of stimulus delivery is also discontinued.

If application of the stimulus command continues, the method starts a timer 426. As timer 426 runs, the microcontroller controls a DC-DC converter to provide a voltage to a storage component to drive and build voltage potential 427. Step 428 determines whether the stored voltage achieves a set threshold (which may be a fraction of the originally established threshold at step 408). If not 432, charging continues. Once this threshold voltage is realized 434, the method stops the timer 436. Measured time values provide information of skin breakdown. If the measured time value is greater than a value indicating breakdown 437, then low resistance is detected 438. In this event, the voltage threshold is set to a lower value considering that skin resistance is low 440. If the measured time value is less than a value indicating minimal to no skin contact 442, then high resistance is detected 444. In this event, the voltage threshold is set to a higher value to increase the chance of a low skin resistance scenario 446. If the method passes through steps 437 and 442 as a "no" then the method at step 448 may either maintain or incrementally increase the voltage threshold based on the timer value, under an embodiment. The method at step 448 may also incrementally decrease the voltage threshold based on the timer value, under an embodiment. After any of the three voltage threshold assessment events, the method returns to step 408 of the stimulus command workflow process.

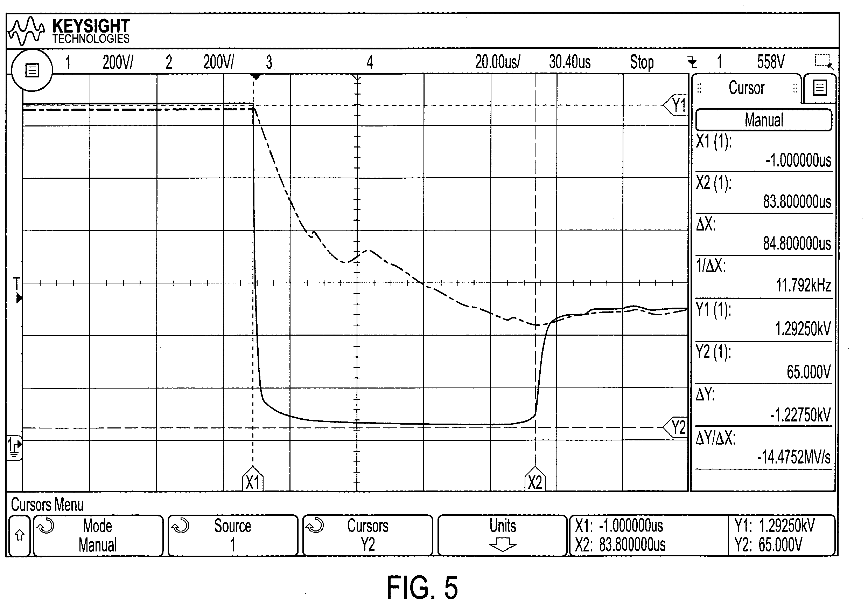

The oscilloscope trace of Figure 5 shows the high voltage electrode and return electrode during the period where the return path switch is activated. In this example, this switch is activated for a period of time about 85 microseconds. The ground electrode attains a voltage equivalent to ground almost immediately. The high voltage electrode starts at the full storage component voltage level and decreases as energy is depleted.

This voltage drop is an indicator of the energy drawn from the system's storage. The lower the pet skin resistance, the more energy is being depleted from the system. The lower the pet skin resistance, the more energy that is being delivered to the pet.

During the single electrical pulse described (and illustrated) above, energy is drawn from the system storage. During this fixed period of time, the following equations can be applied to determine pet skin resistance, which is a direct indicator of effective pulse delivery:

E = energy in joules depleted from the storage component(s) during the stimulus pulse

P = power in watts at an instant of time

V = voltage differential across the electrodes

I = current flowing from the first electrode, through the animal, into the second electrode, to system ground.

R = resistance of the animal's skin

T = time in seconds that the pulse is applied to the animal's skin

$P = VI = V^2/R$ : Power at an instant of time

$E = PT = (V^2/R) * T$ : Energy over a period of time (more specifically, during the stimulus pulse)

$R = (V^2 T) / E$: Resistance of the animal's skin

As can be seen from the preceding equations, energy and resistance have an inverse relationship. The higher the energy level depleted from the system (as determined by monitoring replenishment), the lower the resistance (of the pet's skin).

Long replenishment = more energy depleted = lower skin resistance

Shorter replenishment = less energy depleted = higher skin resistance

Following application of the single pulse above, the system replenishes the system energy as is indicated in the following diagrams (depending on skin resistance).

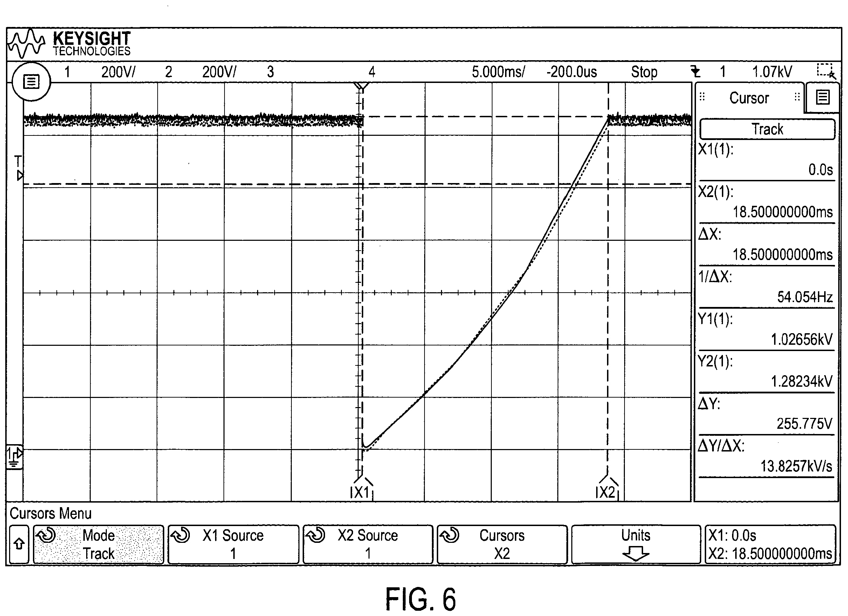

The following oscilloscope traces seen in Figures 6-9 show the high voltage electrode and return electrode before stimulus delivery, during stimulus delivery, and when restoring the energy depleted during the stimulus delivery.

The start of the gap in the traces (seen in Figures 6-9) indicates the instant a short (i.e., 1 microsecond to 200 microsecond) pulse is activated by turning on the "return switch" to enable a return path from the return electrode to ground. This period is where current is allowed to flow from the high voltage electrode, through the skin of the pet, and then to system return (ground). Following this brief period, the remainder of the gap is the period of time required to recharge the storage component(s). This period of time indicates the energy drawn from the system's storage.

Figure 6 shows a single electrical pulse followed by energy recovery assuming a 500 ohm skin resistance. A 500 ohm load indicates strong dermal contact. Figure 6 shows an 18.5ms recovery time (X1 to X2).

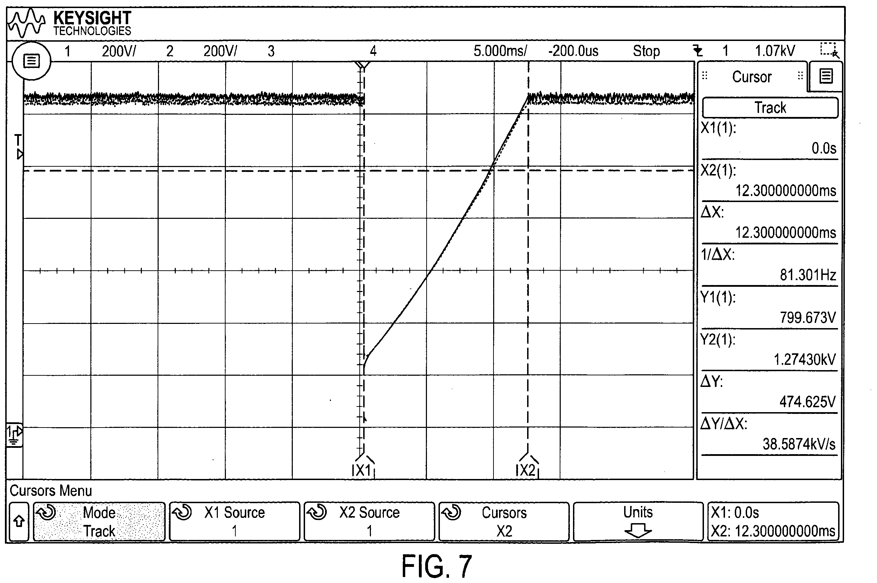

Figure 7 shows a single electrical pulse followed by energy recovery assuming a 10K ohm skin resistance. A 10K ohm load indicates weak dermal contact. Figure 7 shows a 12.3 ms recovery (X1 to X2).

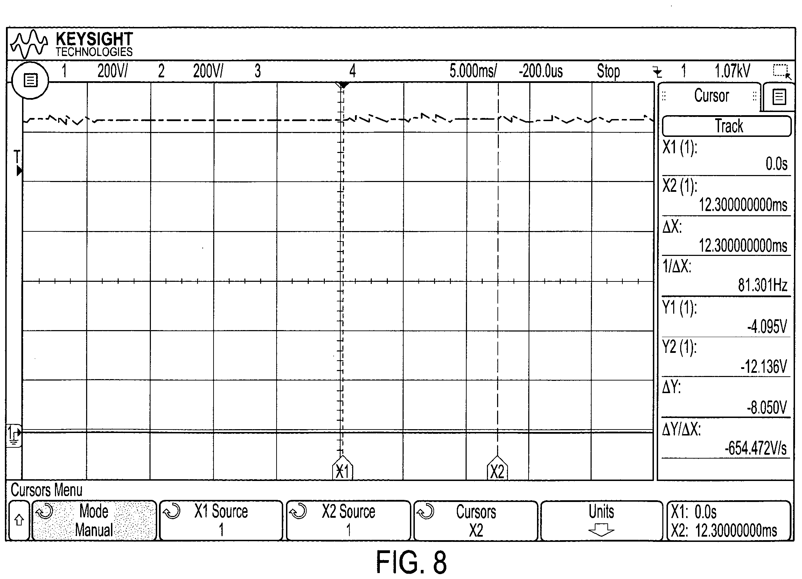

Figure 8 shows a single electrical pulse followed by energy recovery assuming minimal to no skin resistance, i.e. weak dermal contact. The very high resistive load indicates minimal to no dermal contact. Figure 8 shows an immediate recovery, indicating no energy was drained from the system during the stimulation.

If strong dermal contact is detected, subsequent pulses can be reduced in magnitude while still maintaining sufficient energy transfer. Again note that:

$$R = (V^2 * T) / E$$

$$E = (V^2 * T) / R$$

Increased energy depletion indicates that skin resistance has decreased. Therefore, voltage can be decreased while still applying a sufficient stimulus.

If R (skin resistance) decreases due to skin breakdown following a high voltage pulse, voltage (V) can be reduced to transfer equivalent energy to the initial voltage applied as can be seen in the above equations.

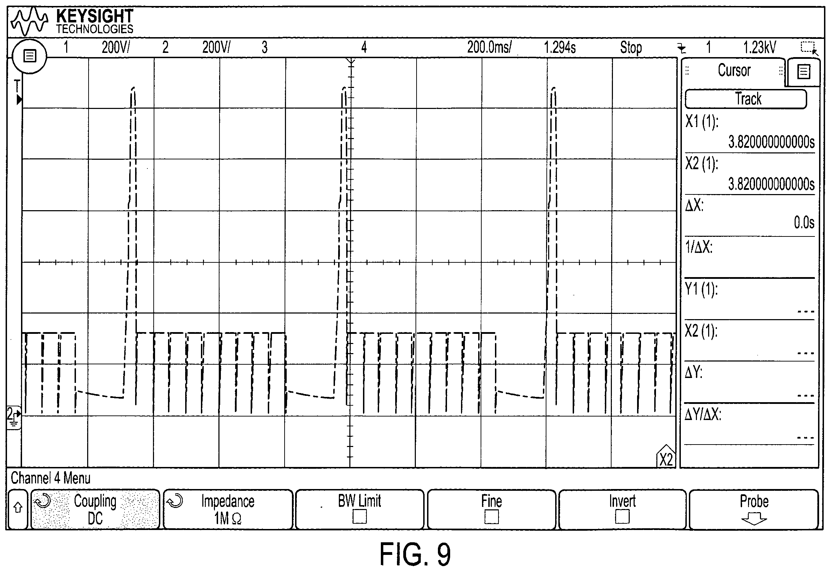

Figure 9 shows a scope trace that illustrates this particular action. The first pulse of each pulse train is applied at a high voltage level. The system determines, based on skin resistance, that skin breakdown has occurred. Therefore, the subsequent pulses are applied at a lower voltage level while still delivering an adequate energy level. The efficacy of each pulse is monitored. If any pulse is determined to be ineffective, the developed voltage can be returned to a high enough level to cause breakdown.

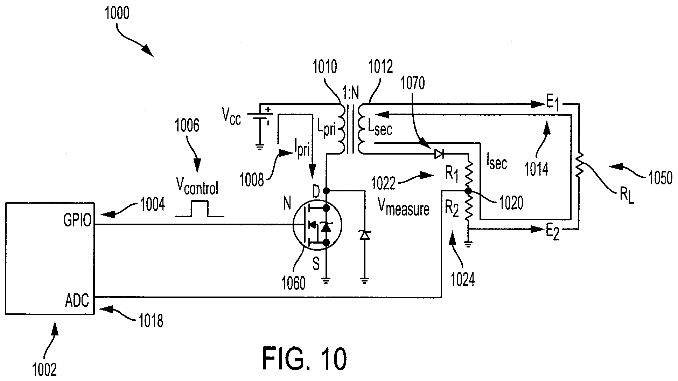

An alternative method and apparatus for measuring the intensity of electrical stimulus delivered to an animal is described below. Figure 10 shows a microcontroller 1002 driving current/voltage to circuit 1000. The circuit delivers an electrical stimulus to an animal wearing a collar housing the circuit. The circuit delivers the stimulus at resistor 1050 ($R_L$) which models the resistive load presented to the circuit.

A method of measuring the intensity of the stimulus delivered at resistor 1050 ($R_L$) is described herein. The method includes setting the general purpose input/output (GPIO) 1004 pin to high. A one shot timer with interrupt on time out is configured to maintain the high position for the desired pulse width. The one shot timer works something like an alarm clock. A timer may be set to "go on" at some point in time (i.e., at time $t_0$ = 0 under this example) and then "go off" after a certain period of time (i.e., at $t_1$ under this example). During the configured pulse width, the microcontroller 1002 provides a control voltage 1006 ($V_{control}$) which allows primary current 1008 ($I_{pri}$) to flow. (Note that the transistor 1060 functions as a switch, i.e. the transistor allows primary current 1008 ($I_{pri}$) to flow when control voltage 1006 ($V_{control}$) is applied). The primary current 1008 ($I_{pri}$) flows through primary winding 1010 ($L_{pri}$). No current flows through the secondary 1012 ($L_{sec}$) during this time due to the direction of diode 1070. Therefore, primary current results in energy being stored in the magnetic core of the transformer. The transformer comprises primary to secondary winding ratio of 1:N. Secondary current will be induced to flow as a result of a flyback phase reversal when the primary current is stopped by the removal of the control signal at transistor 1060. The secondary current 1014 ($I_{sec}$) provides a voltage drop across resistor 1050 ($R_L$), i.e. power dissipation at $R_L$ or delivery of stimulus to the animal.

In the timer interrupt service routine, the microcontroller 1002 returns the GPIO 1004 to low. Immediately following this instruction, the microcontroller 1002 triggers the analog to digital converter 1018 to sample voltage ($V_{measure}$) at location 1020 between resistor 1022 ($R_1$) and resistor 1024 ($R_2$).

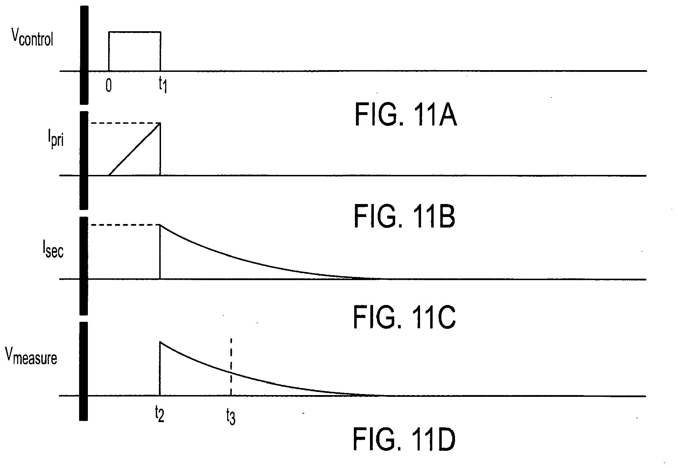

As indicated above, the microcontroller sets GPIO 1004 to high. Figure 11A shows a one shot timer with interrupt for desired pulse width $t_1$. The microcontroller shuts the GPIO 1004 off, i.e. returns it to low, at time $t_1$. The microcontroller then triggers the ADC to sample voltage ($V_{measure}$) of the circuit at location 1020 at $t_1$. It will take a small amount of time for the microcontroller and its ADC to initiate and complete the conversion, therefore the ADC sample ($V_{measure}$) occurs at a time $t_2$ which is slightly greater than $t_1$.

Figure 11B shows primary current ($I_{pri}$) as a function of time during the configured one shot pulse width. Figure 11C shows secondary current ($I_{sec}$) as a function of time after time $t_1$, i.e. after the microcontroller returns GPIO 1004 to low. When the flow of primary current ($I_{pri}$) terminates after $t_1$, note that secondary current ($I_{sec}$) experiences exponential decay to zero.

Figure 11D shows sample voltage $V_{measure}$ over time. Of course, the decay characteristics of $V_{measure}(t)$ correspond to the decay characteristics of $I_{sec}$ as shown in Figure 11C. In an ADC interrupt service routine, microcontroller 1002 reads and saves an ADC measurement of voltage at location 1020 and at time $t_2$ (described previously), i.e. the ADC measures $V_{measure}(t_2)$. A one-shot timer is configured with interrupt on timeout for desired width $t_3 - t_2$. In a timer interrupt service routine, the microcontroller 1002 reads and saves an ADC measurement of voltage at location 1020 and at time $t_3$, i.e. the ADC measures $V_{measure}(t_3)$.

In computing intensity values, the following relationships and equations are important:

Peak Primary Current:

$$I_{pri-pk} = \frac{V_{cc}}{L_{pri}} * t_1$$

Peak Secondary Current:

$$I_{sec-pk} = I_{pri-pk}/N$$

Voltage Measurement:

$$V_{measure}(t) = R_2 * I_{sec-pk} * e^{-(t-t_1)/Tc}$$

Intensity level may be computed as follows:

$$Intensity = I_{sec}(t) * Effective\ Duration$$

$$Intensity = I_{sec-pk} * 3Tc$$

$$T_c = L_{sec}/(R_1 + R_2 + R_L)$$

The method described herein uses $V_{measure}(t_2)$, $V_{measure}(t_3)$, $t_2$, $t_3$, $R_2$, and $Tc$ to estimate intensity of electrical stimulus delivered by circuit 1000.

$$(1) \quad \frac{V_{measure}(t_2)}{V_{measure}(t_3)} = \frac{R_2 * I_{sec-pk} * e^{-(t_2-t_1)/Tc}}{R_2 * I_{sec-pk} * e^{-(t_3-t_1)/Tc}}$$

$$(2) \quad \frac{V_{measure}(t_2)}{V_{measure}(t_3)} = \frac{e^{-(t_2-t_1)/Tc}}{e^{-(t_3-t_1)/Tc}}$$

$$(3) \quad \frac{V_{measure}(t_2)}{V_{measure}(t_3)} = e^{-(t_2-t_1)/Tc+(t_3-t_1)/Tc}$$

$$(4) \quad \ln\left(\frac{V_{measure}(t_2)}{V_{measure}(t_3)}\right) = -(t_2-t_1)/Tc + (t_3-t_1)/Tc$$

$$(5) \quad \ln\left(\frac{V_{measure}(t_2)}{V_{measure}(t_3)}\right) = (t_3-t_2)/Tc$$

$$(6) \quad Tc = \frac{(t_3-t_2)}{\ln\left(\frac{V_{measure}(t_2)}{V_{measure}(t_3)}\right)}$$

$$(7) \quad V_{measure}(t_2) = R_2 * I_{sec-pk} * e^{-(t_2-t_1)/Tc}$$

$$(8) \quad V_{measure}(t_2) = R_2 * I_{sec-pk}$$

$$(9) \quad I_{sec-pk} = R_2 / V_{measure}(t_2)$$

$$(10) \quad INTENSITY = I_{sec-pk} * 3Tc$$

Note the equations (6) and (9) provide values necessary to compute Intensity using equation (10). Note also that equations (6) and (9) are based on voltage measurements ($V_{measure}(t_2)$, $V_{measure}(t_3)$), known time values ($t_2$, $t_3$), known resistor value $R_2$, and known (deduced) time constant value $Tc$. A feedback control loop may now be employed to provide a nearly constant INTENSITY for variations in Tc. Hence, the device may compensate for changes in $R_L$.

A device according to the invention is described herein that comprises at least one processor, a storage component, a power source, a switch, a primary electrode, and a secondary electrode. The device includes the at least one processor for directing the power source to charge the storage component, wherein the charging includes building stored energy until a voltage of the storage component reaches a first value. The device includes the at least one processor for controlling a switch to provide an electrical pathway from the storage component to a resistive load at the earliest when the voltage reaches the first value, the providing the pathway to the resistive load including delivering the stored energy to the resistive load, wherein the primary electrode and the secondary electrode couple through the resistive load. The device includes the at least one processor for controlling the switch to disable the electrical pathway from the storage component to the resistive load. The device includes the at least one processor for directing the power source to recharge the storage component, wherein the at least one processor is configured to determine a time of recharge, wherein the time of recharge is the time required to restore the voltage to the first value. The device includes the at least one processor configured to compare the time of recharge with at least one time value. The device includes the at least one processor configured to use information of the comparing to adjust the first value.

The providing the electrical pathway comprises under an embodiment electrical current passing from the primary electrode, through the resistive load, to the secondary electrode, and to system ground.

The primary electrode and the secondary electrode are under an embodiment in contact with an animal's skin, wherein the resistive load comprises the animal's skin.

The providing the electrical pathway includes under an embodiment the switch providing the electrical pathway from the storage component to the primary electrode.

The providing the electrical pathway includes under an embodiment the switch providing the electrical pathway from the secondary component to system ground.

The at least one processor configured to iteratively adjust the first value by iteratively performing the charging the storage component, the providing the electrical pathway, the disabling the electrical pathway, the recharging the storage component, the comparing the time of recharge with the at least one time value, and the using the information of the comparing to adjust the first value, under an embodiment.

The device of an embodiment comprises a feedback loop, wherein the feedback loop provides information of the storage component, the information of the storage component including a present voltage of the storage component.

The providing the electrical pathway includes under an embodiment using the information of the storage component to determine when the voltage of the storage component reaches the first value.

The recharging the storage component includes under an embodiment using the information of the storage component to determine the time of recharge.

The at least one processor of an embodiment is configured to use an instance of the present voltage of the storage component after the disabling the electrical pathway to adjust the first value.

The iteratively adjusting the first value comprises under an embodiment iteratively performing the using an instance of the present voltage after the disabling the electrical pathway to adjust the first value.

The using information of the comparing includes under an embodiment adjusting the first value to a lower value when the time of recharge is greater than a first time value of the at least one time value.

The using information of the comparing includes under an embodiment adjusting the first value to a higher value when the time of recharge is less than a second time value of the at least one time value.

The first time value and the second time value of an embodiment correspond to a first period of time and a second period of time, wherein first period of time is greater than the second period of time.

The using information of the comparing includes under an embodiment adjusting the first value to at least one of a higher value and a lower value when the time of recharge is less than the first time value of the at least one time value and greater than the second time value of the at least one time value.

The using information of the comparing includes under an embodiment maintaining the first value when the time of recharge is less than the first time value of the at least one time value and greater than the second time value of the at least one time value.

The at least one processor of an embodiment comprises a microcontroller, wherein the microcontroller provides an input voltage to the power source, wherein the power source comprises a power converter.

A method performed on a device according to the invention is described herein comprising charging a storage component, wherein the charging includes building stored energy in the storage component until a voltage of the storage component reaches a first value. The method includes providing an electrical pathway from the storage component to a resistive load at the earliest when the voltage reaches the first value, the providing the pathway to the primary electrode including delivering the stored energy to the resistive load, wherein a primary electrode and a secondary electrode couple through the resistive load. The method includes disabling the electrical pathway from the storage component to the resistive load. The method includes recharging the storage component, wherein the recharging incudes determining a time of recharge, wherein the time of recharge is the time required to restore the voltage to the first value. The method includes using the time of recharge to adjust the first value. The method includes iteratively adjusting the first value by iteratively performing the charging the storage component, the providing the electrical pathway, the disabling the electrical pathway, the recharging the storage component, and the using the time of recharge to adjust the first value.

The method of an embodiment includes using the time of recharge to adjust the first value including adjusting the first value to a lower value when the time of recharge is greater than a first time value of the at least one time value.

The method of an embodiment includes the using the time of recharge to adjust the first value including adjusting the first value to a higher value when the time of recharge is less than a second time value of the at least one time value.

Computer networks suitable for use with the embodiments described herein include local area networks (LAN), wide area networks (WAN), Internet, or other connection services and network variations such as the world wide web, the public internet, a private internet, a private computer network, a public network, a mobile network, a cellular network, a value-added network, and the like. Computing devices coupled or connected to the network may be any microprocessor controlled device that permits access to the network, including terminal devices, such as personal computers, workstations, servers, mini computers, main-frame computers, laptop computers, mobile computers, palm top computers, hand held computers, mobile phones, TV set-top boxes, or combinations thereof. The computer network may include one of more LANs, WANs, Internets, and computers. The computers may serve as servers, clients, or a combination thereof.

The systems and methods for dynamic voltage modulation can be a component of a single system, multiple systems, and/or geographically separate systems. The systems and methods for dynamic voltage modulation can also be a subcomponent or subsystem of a single system, multiple systems, and/or geographically separate systems. The components of systems and methods for dynamic voltage modulation can be coupled to one or more other components (not shown) of a host system or a system coupled to the host system.

One or more components of the systems and methods for dynamic voltage modulation and/or a corresponding interface, system or application to which the systems and methods for dynamic voltage modulation is coupled or connected includes and/or runs under and/or in association with a processing system. The processing system includes any collection of processor-based devices or computing devices operating together, or components of processing systems or devices, as is known in the art. For example, the processing system can include one or more of a portable computer, portable communication device operating in a communication network, and/or a network server. The portable computer can be any of a number and/or combination of devices selected from among personal computers, personal digital assistants, portable computing devices, and portable communication devices, but is not so limited. The processing system can include components within a larger computer system.

The processing system of an embodiment includes at least one processor and at least one memory device or subsystem. The processing system can also include or be coupled to at least one database. The term "processor" as generally used herein refers to any logic processing unit, such as one or more central processing units (CPUs), digital signal processors (DSPs), application-specific integrated circuits (ASIC), etc. The processor and memory can be monolithically integrated onto a single chip, distributed among a number of chips or components, and/or provided by some combination of algorithms. The methods described herein can be implemented in one or more of software algorithm(s), programs, firmware, hardware, components, circuitry, in any combination.

The components of any system that include the systems and methods for dynamic voltage modulation can be located together or in separate locations. Communication paths couple the components and include any medium for communicating or transferring files among the components. The communication paths include wireless connections, wired connections, and hybrid wireless/wired connections. The communication paths also include couplings or connections to networks including local area networks (LANs), metropolitan area networks (MANs), wide area networks (WANs), proprietary networks, interoffice or backend networks, and the Internet. Furthermore, the communication paths include removable fixed mediums like floppy disks, hard disk drives, and CD-ROM disks, as well as flash RAM, Universal Serial Bus (USB) connections, RS-232 connections, telephone lines, buses, and electronic mail messages.

Aspects of the systems and methods for dynamic voltage modulation and corresponding systems and methods described herein may be implemented as functionality programmed into any of a variety of circuitry, including programmable logic devices (PLDs), such as field programmable gate arrays (FPGAs), programmable array logic (PAL) devices, electrically programmable logic and memory devices and standard cell-based devices, as well as application specific integrated circuits (ASICs). Some other possibilities for implementing aspects of the systems and methods for dynamic voltage modulation and corresponding systems and methods include: microcontrollers with memory (such as electronically erasable programmable read only memory (EEPROM)), embedded microprocessors, firmware, software, etc. Furthermore, aspects of the systems and methods for dynamic voltage modulation and corresponding systems and methods may be embodied in microprocessors having software-based circuit emulation, discrete logic (sequential and combinatorial), custom devices, fuzzy (neural) logic, quantum devices, and hybrids of any of the above device types. Of course the underlying device technologies may be provided in a variety of component types, e.g., metal-oxide semiconductor field-effect transistor (MOSFET) technologies like complementary metal-oxide semiconductor (CMOS), bipolar technologies like emitter-coupled logic (ECL), polymer technologies (e.g., silicon-conjugated polymer and metal-conjugated polymer-metal structures), mixed analog and digital, etc.

It should be noted that any system, method, and/or other components disclosed herein may be described using computer aided design tools and expressed (or represented), as data and/or instructions embodied in various computer-readable media, in terms of their behavioral, register transfer, logic component, transistor, layout geometries, and/or other characteristics. Computer-readable media in which such formatted data and/or instructions may be embodied include, but are not limited to, non-volatile storage media in various forms (e.g., optical, magnetic or semiconductor storage media) and carrier waves that may be used to transfer such formatted data and/or instructions through wireless, optical, or wired signaling media or any combination thereof. Examples of transfers of such formatted data and/or instructions by carrier waves include, but are not limited to, transfers (uploads, downloads, e-mail, etc.) over the Internet and/or other computer networks via one or more data transfer protocols (e.g., HTTP, FTP, SMTP, etc.). When received within a computer system via one or more computer-readable media, such data and/or instruction-based expressions of the above described components may be processed by a processing entity (e.g., one or more processors) within the computer system in conjunction with execution of one or more other computer programs.

Unless the context clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import, when used in this application, refer to this application as a whole and not to any particular portions of this application. When the word "or" is used in reference to a list of two or more items, that word covers all of the following interpretations of the word: any of the items in the list, all of the items in the list and any combination of the items in the list.

**Claims**

1. A device comprising,

at least one processor (202), a storage component (206), a power source (204), a switch (214), a primary electrode (210), and a secondary electrode (212);
the at least one processor for directing the power source to charge the storage component, wherein the charging includes building stored energy until a voltage of the storage component reaches a first value;
the at least one processor for controlling the switch to provide an electrical pathway from the storage component to a resistive load (240) at the earliest when the voltage reaches the first value, the providing the pathway to the resistive load including delivering the stored energy to the resistive load, wherein the primary electrode and the secondary electrode couple through the resistive load;
the at least one processor for controlling the switch to disable the electrical pathway from the storage component to the resistive load;
the at least one processor for directing the power source to recharge the storage component,
**characterized in that**:

the at least one processor is configured to determine a time of recharge, wherein the time of recharge is the time required to restore the voltage to the first value;
the at least one processor configured to compare the time of recharge with at least one time value; and
the at least one processor configured to use information of the comparing to adjust the first value.

2. The device of claim 1, the providing the electrical pathway comprising electrical current passing from the primary electrode, through the resistive load, to the secondary electrode, and to system ground.

3. The device of claim 1, wherein the primary electrode and the secondary electrode are in contact with an animal's skin, wherein the resistive load comprises the animal's skin.

4. The device of claim 3, the providing the electrical pathway including the switch providing the electrical pathway from the storage component to the primary electrode.

5. The device of 3, the providing the electrical pathway including the switch providing the electrical pathway from the secondary component to system ground.

6. The device of claim 1, the at least one processor configured to iteratively adjust the first value by iteratively performing the charging the storage component, the providing the electrical pathway, the disabling the electrical pathway, the recharging the storage component, the comparing the time of recharge with the at least one time value, and the using the information of the comparing to adjust the first value.

7. The device of claim 6, wherein the device comprises a feedback loop (208), wherein the feedback loop provides information of the storage component, the information of the storage component including a present voltage of the storage component.

8. The device of claim 7, the providing the electrical pathway including using the information of the storage component to determine when the voltage of the storage component reaches the first value.

9. The device of claim 7, the recharging the storage component including using the information of the storage component to determine the time of recharge.

10. The device of claim 7, the at least one processor configured to use an instance of the present voltage of the storage component after the disabling the electrical pathway to adjust the first value.

11. The device of claim 10, the iteratively adjusting the first value comprises iteratively performing the using an instance of the present voltage after the disabling the electrical pathway to adjust the first value.

**12.** The device of claim 1, the using information of the comparing including adjusting the first value to a lower value when the time of recharge is greater than a first time value of the at least one time value.

**13.** The device of claim 12, the using information of the comparing including adjusting the first value to a higher value when the time of recharge is less than a second time value of the at least one time value.

**14.** The device of claim 13, wherein the first time value and the second time value correspond to a first period of time and a second period of time, wherein first period of time is greater than the second period of time.

**15.** The device of claim 1, the using information of the comparing including adjusting the first value to at least one of a higher value and a lower value when the time of recharge is less than the first time value of the at least one time value and greater than the second time value of the at least one time value.

**16.** The device of claim 1, the using information of the comparing including maintaining the first value when the time of recharge is less than the first time value of the at least one time value and greater than the second time value of the at least one time value.

**17.** The device of claim 1, wherein the at least one processor comprises a microcontroller (202), wherein the microcontroller provides an input voltage to the power source, wherein the power source comprises a power converter (204).

**18.** A method performed on a device according to any one of claims 1 to 17 comprising,

charging a storage component (406), wherein the charging includes building stored energy in the storage component until a voltage of the storage component reaches a first value;
providing an electrical pathway from the storage component to a resistive load at the earliest when the voltage reaches the first value, the providing the pathway to the primary electrode including delivering the stored energy to the resistive load, wherein a primary electrode and a secondary electrode couple through the resistive load;
disabling the electrical pathway (422) from the storage component to the resistive load;
recharging the storage component (427), wherein the recharging incudes determining a time of recharge (426, 436), wherein the time of recharge is the time required to restore the voltage to the first value;
using the time of recharge to adjust the first value (440, 446);
iteratively adjusting the first value (448) by iteratively performing the charging the storage component, the providing the electrical pathway, the disabling the electrical pathway, the recharging the storage component, and the using the time of recharge to adjust the first value.

**Patentansprüche**

**1.** Vorrichtung, die Folgendes umfasst:

zumindest einen Prozessor (202), eine Speicherkomponente (206), eine Leistungsquelle (204), einen Schalter (214), eine Primärelektrode (210) und eine Sekundärelektrode (212),
wobei der zumindest eine Prozessor zum Steuern der Leistungsquelle dient, um die Speicherkomponente zu laden, wobei das Laden das Aufbauen von gespeicherter Energie umfasst, bis die Spannung der Speicherkomponente einen ersten Wert erreicht;
wobei der zumindest eine Prozessor zum Steuern des Schalters dient, um einen elektrischen Pfad von der Speicherkomponente zu einer ohmschen Last (240) frühestens dann bereitzustellen, wenn die Spannung einen ersten Wert erreicht, wobei das Bereitstellen des Pfads zur ohmschen Last das Zuführen der gespeicherten Energie an die ohmsche Last umfasst, wobei die Primärelektrode und die Sekundärelektrode durch die ohmsche Last gekoppelt sind;
wobei der zumindest eine Prozessor zum Steuern des Schalters dient, um den elektrischen Pfad von der Speicherkomponente zur ohmschen Last zu unterbrechen;
wobei der zumindest eine Prozessor zum Steuern der Leistungsquelle dient, um die Speicherkomponente wiederaufzuladen,
**dadurch gekennzeichnet, dass**:

der zumindest eine Prozessor ausgelegt ist, um eine Wiederaufladezeit zu bestimmen, wobei die Wiederaufladezeit erforderlich ist, um die Spannung wieder auf den ersten Wert zu bringen;

wobei der zumindest eine Prozessor ausgelegt ist, um die Wiederaufladezeit mit zumindest einem Zeitwert zu vergleichen; und

wobei der zumindest eine Prozessor ausgelegt ist, um Informationen des Vergleichs zu verwenden, um den ersten Wert einzustellen.

2. Vorrichtung nach Anspruch 1, wobei das Bereitstellen des elektrischen Pfads umfasst, dass elektrischer Strom von der Primärelektrode durch die ohmsche Last zur Sekundärelektrode und zur Systemmasse fließt.

3. Vorrichtung nach Anspruch 1, wobei die Primärelektrode und die Sekundärelektrode mit der Haut eines Tiers in Kontakt sind, wobei die ohmsche Last die Haut des Tiers umfasst.

4. Vorrichtung nach Anspruch 3, wobei das Bereitstellen des elektrischen Pfads umfasst, dass der Schalter den elektrischen Pfad von der Speicherkomponente zur Primärelektrode bereitstellt.

5. Vorrichtung nach Anspruch 3, wobei das Bereitstellen des elektrischen Pfads umfasst, dass der Schalter den elektrischen Pfad von der Sekundärelektrode zur Systemmasse bereitstellt.

6. Vorrichtung nach Anspruch 1, wobei der zumindest eine Prozessor ausgelegt ist, um den ersten Wert iterativ einzustellen, indem iterativ das Laden der Speicherkomponente, das Bereitstellen des elektrischen Pfads, das Unterbrechen des elektrischen Pfads, das Wiederaufladen der Speicherkomponente, das Vergleichen der Wiederaufladezeit mit dem zumindest einen Zeitwert und das Verwenden der Informationen des Vergleichs, um den ersten Wert einzustellen, durchgeführt wird.

7. Vorrichtung nach Anspruch 6, wobei die Vorrichtung eine Rückkopplungsschleife (208) umfasst, wobei die Rückkopplungsschleife Informationen über die Speicherkomponente bereitstellt, wobei die Informationen über die Speicherkomponente eine vorhandene Spannung der Speicherkomponente umfassen.

8. Vorrichtung nach Anspruch 7, wobei das Bereitstellen des elektrischen Pfads das Verwenden der Informationen über die Speicherkomponente umfasst, um zu bestimmen, wann die Spannung der Speicherkomponente den ersten Wert erreicht.

9. Vorrichtung nach Anspruch 7, wobei das Wiederaufladen der Speicherkomponente das Verwenden der Informationen über die Speicherkomponente umfasst, um die Wiederaufladezeit zu bestimmen.

10. Vorrichtung nach Anspruch 7, wobei der zumindest eine Prozessor ausgelegt ist, um ein Beispiel der vorhandenen Spannung der Speicherkomponente nach dem Unterbrechen des elektrischen Pfads zu verwenden, um den ersten Wert einzustellen.

11. Vorrichtung nach Anspruch 10, wobei das iterative Einstellen des ersten Werts das iterative Durchführen der Verwendung eines Beispiels der vorhandenen Spannung nach dem Unterbrechen des elektrischen Pfads umfasst, um den ersten Wert einzustellen.

12. Vorrichtung nach Anspruch 1, wobei das Verwenden von Informationen des Vergleichs das Einstellen des ersten Werts auf einen niedrigeren Wert umfasst, wenn die Wiederaufladezeit größer ist als ein erster Zeitwert des zumindest einen Zeitwerts.

13. Vorrichtung nach Anspruch 12, wobei das Verwenden von Informationen des Vergleichs das Einstellen des ersten Werts auf einen höheren Wert umfasst, wenn die Wiederaufladezeit kleiner als ein zweiter Zeitwert des zumindest einen Zeitwerts ist.

14. Vorrichtung nach Anspruch 13, wobei der erste Zeitwert und der zweite Zeitwert einer ersten Zeitdauer und einer zweiten Zeitdauer entsprechen, wobei die erste Zeitdauer länger ist als die zweite Zeitdauer.

15. Vorrichtung nach Anspruch 1, wobei das Verwenden von Informationen des Vergleichs das Einstellen des ersten Werts auf zumindest einen aus einem höheren Wert und einem niedrigeren Wert umfasst, wenn die Wiederaufladezeit kleiner als der erste Zeitwert des zumindest einen Zeitwerts und größer als der zweite Zeitwert des zumindest einen Zeitwerts ist.

**16.** Vorrichtung nach Anspruch 1, wobei das Verwenden von Informationen des Vergleichs das Beibehalten des ersten Werts umfasst, wenn die Wiederaufladezeit kleiner als der erste Zeitwert des zumindest einen Zeitwerts und größer als der zweite Zeitwert des zumindest einen Zeitwerts ist.

**17.** Vorrichtung nach Anspruch 1, wobei der zumindest eine Prozessor eine Mikrosteuerung (202) umfasst, wobei die Mikrosteuerung eine Eingangsspannung für die Leistungsquelle bereitstellt, wobei die Leistungsquelle einen Leistungswandler (204) umfasst.

**18.** Verfahren, das auf einer Vorrichtung nach einem der Ansprüche 1 bis 17 ausgeführt wird und Folgendes umfasst:

Laden einer Speicherkomponente (406), wobei das Laden das Aufbauen von gespeicherter Energie in der Speicherkomponente umfasst, bis die Spannung der Speicherkomponente einen ersten Wert erreicht;
Bereitstellen eines elektrischen Pfads von der Speicherkomponente zu einer ohmschen Last frühestens dann, wenn die Spannung den ersten Wert erreicht, wobei das Bereitstellen des Pfads zur ohmschen Last das Zuführen der gespeicherten Energie an die ohmsche Last umfasst, wobei die Primärelektrode und die Sekundärelektrode durch die ohmsche Last gekoppelt sind;
Unterbrechen des elektrischen Pfads (422) von der Speicherkomponente zur ohmschen Last;
Wiederaufladen der Speicherkomponente (427), wobei das Wiederaufladen das Bestimmen einer Wiederaufladezeit (426, 436) umfasst, wobei die Wiederaufladezeit die Zeit ist, die erforderlich ist, um die Spannung wieder auf den ersten Wert zu bringen;
Verwenden der Wiederaufladezeit, um den ersten Wert (440, 446) einzustellen;
iteratives Einstellen des ersten Werts (448) durch iteratives Durchführen des Ladens der Speicherkomponente, des Bereitstellens des elektrischen Pfads, des Unterbrechens des elektrischen Pfads, des Wiederaufladens der Speicherkomponente und des Verwendens der Wiederaufladezeit, um den ersten Wert einzustellen.

## Revendications

**1.** Dispositif comprenant,

au moins un processeur (202), un composant de stockage (206), une source d'alimentation (204), un commutateur (214), une électrode primaire (210), et une électrode secondaire (212) ;
ledit au moins un processeur étant destiné à diriger la source d'alimentation pour charger le composant de stockage, dans lequel le chargement comprend le développement d'énergie stockée jusqu'à ce qu'une tension du composant de stockage atteigne une première valeur ;
ledit au moins un processeur étant destiné à commander le commutateur pour fournir un chemin électrique depuis le composant de stockage vers une charge résistive (240) au plus tôt lorsque la tension atteint la première valeur, la fourniture du chemin vers la charge résistive comprenant la libération de l'énergie stockée vers la charge résistive, dans lequel l'électrode primaire et l'électrode secondaire se couplent via la charge résistive ;
ledit au moins un processeur étant destiné à commander le commutateur afin de désactiver le chemin électrique allant du composant de stockage à la charge résistive ;
ledit au moins un processeur étant destiné à diriger la source d'alimentation pour recharger le composant de stockage,
**caractérisé en ce que** :

ledit au moins un processeur est configuré pour déterminer un temps de recharge, le temps de recharge étant le temps nécessaire pour rétablir la tension à la première valeur ;
ledit au moins un processeur est configuré pour comparer le temps de recharge à au moins une valeur temporelle ; et
ledit au moins un processeur est configuré pour utiliser des informations de la comparaison pour ajuster la première valeur.

**2.** Dispositif selon la revendication 1, la fourniture du chemin électrique comprenant le passage d'un courant électrique depuis l'électrode primaire, à travers la charge résistive, jusqu'à l'électrode secondaire, et jusqu'à la terre du système.

**3.** Dispositif selon la revendication 1, dans lequel l'électrode primaire et l'électrode secondaire sont en contact avec la peau d'un animal, dans lequel la charge résistive comprend la peau de l'animal.

4. Dispositif selon la revendication 3, la fourniture du chemin électrique comprenant la fourniture du chemin électrique par le commutateur depuis le composant de stockage vers l'électrode primaire.

5. Dispositif selon la revendication 3, la fourniture du chemin électrique comprenant la fourniture du chemin électrique par le commutateur depuis le composant secondaire vers la terre du système.

6. Dispositif selon la revendication 1, ledit au moins un processeur étant configuré pour ajuster de manière itérative la première valeur en effectuant de manière itérative le chargement du composant de stockage, la fourniture du chemin électrique, la désactivation du chemin électrique, la recharge du composant de stockage, la comparaison du temps de recharge avec ladite au moins une valeur temporelle, et l'utilisation des informations de la comparaison pour ajuster la première valeur.

7. Dispositif selon la revendication 6, dans lequel le dispositif comprend une boucle de rétroaction (208), dans lequel la boucle de rétroaction fournit des informations sur le composant de stockage, les informations sur le composant de stockage comprenant une tension actuelle du composant de stockage.

8. Dispositif selon la revendication 7, la fourniture du chemin électrique comprenant l'utilisation des informations du composant de stockage pour déterminer le moment où la tension du composant de stockage atteint la première valeur.

9. Dispositif selon la revendication 7, la recharge du composant de stockage comprenant l'utilisation des informations du composant de stockage pour déterminer le temps de recharge.

10. Dispositif selon la revendication 7, ledit au moins un processeur étant configuré pour utiliser une instance de la tension actuelle du composant de stockage après la désactivation du chemin électrique pour ajuster la première valeur.

11. Dispositif selon la revendication 10, l'ajustement itératif de la première valeur comprenant la mise en œuvre itérative de l'utilisation d'une instance de la tension actuelle après la désactivation du chemin électrique pour ajuster la première valeur.

12. Dispositif selon la revendication 1, l'utilisation d'informations de la comparaison comprenant l'ajustement de la première valeur à une valeur inférieure lorsque le temps de recharge est supérieur à une première valeur temporelle de ladite au moins une valeur temporelle.

13. Dispositif selon la revendication 12, l'utilisation des informations de la comparaison comprenant l'ajustement de la première valeur à une valeur supérieure lorsque le temps de recharge est inférieur à une seconde valeur temporelle de ladite au moins une valeur temporelle.

14. Dispositif selon la revendication 13, dans lequel la première valeur temporelle et la seconde valeur temporelle correspondent à une première période de temps et une seconde période de temps, dans lequel la première période de temps est supérieure à la seconde période de temps.

15. Dispositif selon la revendication 1, l'utilisation des informations de la comparaison comprenant l'ajustement de la première valeur à au moins une valeur parmi une valeur supérieure et une valeur inférieure lorsque le temps de recharge est inférieur à la première valeur temporelle de ladite au moins une valeur temporelle et supérieur à la seconde valeur temporelle de ladite au moins une valeur temporelle.

16. Dispositif selon la revendication 1, l'utilisation des informations de la comparaison comprenant le maintien de la première valeur lorsque le temps de recharge est inférieur à la première valeur temporelle de ladite au moins une valeur temporelle et supérieur à la seconde valeur temporelle de ladite au moins une valeur temporelle.

17. Dispositif selon la revendication 1, dans lequel ledit au moins un processeur comprend un microcontrôleur (202), dans lequel le microcontrôleur fournit une tension d'entrée à la source d'alimentation, dans lequel la source d'alimentation comprend un convertisseur de puissance (204).

**18.** Procédé effectué sur un dispositif selon l'une quelconque des revendications 1 à 17 comprenant les étapes consistant à,

charger un composant de stockage (406), dans lequel le chargement comprend le développement de l'énergie stockée dans le composant de stockage jusqu'à ce qu'une tension du composant de stockage atteigne une première valeur ;

fournir un chemin électrique depuis le composant de stockage vers une charge résistive au plus tôt lorsque la tension atteint la première valeur, la fourniture du chemin vers l'électrode primaire comprenant la libération de l'énergie stockée vers la charge résistive, dans lequel une électrode primaire et une électrode secondaire se couplent à travers la charge résistive ;

désactiver le chemin électrique (422) depuis le composant de stockage vers la charge résistive ;

recharger le composant de stockage (427), dans lequel la recharge comprend la détermination d'un temps de recharge (426, 436), dans lequel le temps de recharge est le temps nécessaire pour rétablir la tension à la première valeur ;

utiliser le temps de recharge pour ajuster la première valeur (440, 446) ;

ajuster de manière itérative la première valeur (448) en effectuant de manière itérative le chargement du composant de stockage, la fourniture du chemin électrique, la désactivation du chemin électrique, la recharge du composant de stockage, et l'utilisation du temps de recharge pour ajuster la première valeur.

FIG. 1

FIG. 2

EP 3 723 476 B1

FIG. 3

EP 3 723 476 B1

FIG. 4

FIG. 5

FIG. 6

**KEYSIGHT** TECHNOLOGIES

| 1 | 200V/ | 2 | 200V/ | 3 | | 4 | | 5.000ms/ | -200.0us | Stop | | 1 | 1.07kV |

EP 3 723 476 B1

**Cursor**

Track

X1(1):
0.0s

X2(1):
12.300000000ms

ΔX:
12.300000000ms

1/ΔX:
81.301Hz

Y1(1):
799.673V

Y2(1):
1.27430kV

ΔY:
474.625V

ΔY/ΔX:
38.5874kV/s

|X1|          |X2|

Cursors Menu

| Mode Track | X1 Source 1 | X2 Source 1 | Cursors X2 | Units ⬇ | X1: 0.0s X2: 12.300000000ms |

FIG. 7

FIG. 8

FIG. 9

EP 3 723 476 B1

FIG. 10

$V_{control}$

0    $t_1$

FIG. 11A

$I_{pri}$

FIG. 11B

$I_{sec}$

FIG. 11C

$V_{measure}$

$t_2$    $t_3$

FIG. 11D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 15839737 B
- US 15839749 B
- US 2014228927 A
- US 2008216766 A
- US 2009112284 A